# EUROPÄISCHE PATENTSCHRIFT

(11) **EP 3 366 633 B1**
(45) Veröffentlichungstag und Bekanntmachung des Hinweises auf die Patenterteilung: **08.07.2020**
(21) Anmeldenummer: 18155769.5
(22) Anmeldetag: 08.02.2018
(51) Int. Cl.: B66C 1/42, B66C 1/10

(54) **HEBEVORRICHTUNG FÜR EINE KRAFTFAHRZEUGBAUGRUPPE SOWIE BLOCKIEREINHEIT FÜR EINE HEBEVORRICHTUNG.**
LIFTING DEVICE FOR A MOTOR VEHICLE SUB-ASSEMBLY AND BLOCKING UNIT FOR A LIFTING DEVICE.
DISPOSITIF DE LEVAGE POUR UN MODULE DE VÉHICULE AUTOMOBILE AINSI QU'UNITÉ DE BLOCAGE POUR UN DISPOSITIF DE LEVAGE.

(30) Priorität: 22.02.2017 DE 102017103599
(43) Veröffentlichungstag der Anmeldung: 29.08.2018
(73) Patentinhaber: TKR Spezialwerkzeuge GmbH, 58285 Gevelsberg (DE)
(72) Erfinder: Kreischer, Torsten, 58300 Wetter (DE); Weyland, Thorsten, 58313 Herdecke (DE)
(74) Vertreter: Kalkoff & Partner Patentanwälte PartmbB

(56) Entgegenhaltungen:
- DE-A1-102014 117 703

## Beschreibung

Die Erfindung betrifft eine Hebevorrichtung für eine Kraftfahrzeugbaugruppe, mit
- einer Lastaufnahmeeinheit mit mindestens einem um eine Längsachse der Lastaufnahmeeinheit schwenkbaren Tragarm sowie
- einer an dem Tragarm angeordneten Kopplungseinheit zur lösbaren Verbindung des Tragarms mit der Kraftfahrzeugbaugruppe, wobei die Kopplungseinheit längsverschieblich an dem Tragarm gelagert ist und die Lastaufnahmeeinheit zur Verbindung mit einer Kraneinheit ausgebildet ist, insbesondere eine Kranhakenaufnahme aufweist.

Hebevorrichtungen der eingangs genannten Art sind beispielsweise aus der DE 10 2014 117 703 A1 bekannt. Sie werden insbesondere in Fahrzeugwerkstätten eingesetzt, um Kraftfahrzeugbaugruppen, bspw. Antriebsaggregate wie Kraftfahrzeugmotoren zu demontieren, wobei die Lastaufnahmeeinheit der Hebevorrichtung hierzu durch eine Positionierung des Tragarms gegenüber dem zu demontierenden Aggregat ausgerichtet wird. Nach einer Verbindung der Kraftfahrzeugbaugruppe über die an dem Tragarm angeordnete Kopplungseinheit kann dann nach einer Auflösung der Verbindung der Kraftfahrzeugbaugruppe mit dem Kraftfahrzeug das demontierte Aggregat über eine mit der Kranhakenaufnahme der Lastaufnahmeeinheit verbundene Kraneinheit aus dem Kraftfahrzeug herausgehoben werden.

Zur Demontage von Kraftfahrzeugbaugruppen, welche von einer Unterseite des Fahrzeugs entnommen werden müssen, ist es erforderlich, die Lastaufnahmeeinheit mit einer Stützvorrichtung zu kombinieren, welche es ermöglicht, die Hebevorrichtung mit bekannten, üblicherweise in Fahrzeugwerkstätten vorhandenen Hubeinheiten zu verbinden, welche bspw. nach dem Anheben des Fahrzeugs über eine Hebebühne unterhalb der zu demontierenden Kraftfahrzeugbaugruppe positioniert werden können. Über die Lastaufnahmeeinheit kann dann eine Verbindung mit der zu demontierenden Baugruppe hergestellt und dann über die Hebevorrichtung die getrennte Baugruppe durch eine abwärts gerichtete Bewegung aus dem Fahrzeug entfernt werden.

In der DE 10 2014 117 703 A1 ist dabei die Lastaufnahmeeinheit lösbar mit einem Anschlusskörper einer Stützeinheit verbunden, wobei der Anschlusskörper zudem neigbar an der Stützeinheit angeordnet ist. Ferner ist der Tragarm schwenkbar um den Führungsbolzen der Lastaufnahmeeinheit ausgebildet und kann über eine einen verstellbaren Bremskörper aufweisenden Bremseinheit zwischen einer Freigabestellung und einer Arretierungsstellung verstellt werden. Nachteilig dabei ist, dass sich die Bremseinheit platzintensiv über die gesamte Tragarmlänge, sowie beidseitig über den Tragarm hinaus erstreckt. In der Arretierungsstellung liegt der Bremskörper kraftschlüssig an der Oberfläche des Führungsbolzens an. Dabei greift er unmittelbar in die am Führungsbolzen angeordnete Drehlagerung des Tragarms ein. Dadurch kann Schmutz oder Bremskörperabrieb in die Lagerung eindringen und somit eine mögliche Beschädigung des Lagers verursachen.

Zudem weisen die DE 10 2014 117 703 A1 sowie bekannte Hebevorrichtungen der eingangs genannten Art weisen jedoch den Nachteil auf, dass diese zur Verbindung mit einer Hubeinheit mit einer entsprechend ausgestalteten Stützeinheit ausgebildet sein müssen, welche sowohl den Anschluss an die Hubeinheit ermöglicht als auch die Ausrichtung der Lastaufnahmeeinheit erlaubt. Die üblicherweise dauerhaft unterhalb der Lastaufnahmeeinheit angeordnete Stützvorrichtung führt jedoch dazu, dass die Hebevorrichtung insgesamt ein hohes Eigengewicht sowie ein großes Bauvolumen in Anspruch nimmt, auch wenn diese nur in Verbindung mit einer Kraneinheit genutzt wird.

Der Erfindung liegt die Aufgabe zugrunde, eine kompakte Hebevorrichtung der eingangs genannten Art mit einer Blockiereinheit bereitzustellen, die eine zuverlässige Positionierung eines Tragarms in einer eingestellten Position erlaubt und zudem besonders beständig sowie montage- und wartungsfreundlich ist.

Die Erfindung löst die Aufgabe durch eine Hebevorrichtung mit den Merkmalen des Anspruchs 1. Vorteilhafte Weiterbildungen der Erfindung sind in den abhängigen Ansprüchen angegeben.

Kennzeichnend für die erfindungsgemäße Hebevorrichtung, die insbesondere als Getriebeheber und Motorheber einsetzbar ist, ist, dass an dem Tragarm eine Blockiereinheit angeordnet ist, die zwischen einer den Tragarm zur Verschwenkung freigebenden Freigabestellung und einer den Tragarm an der Lastaufnahmeeinheit festlegenden Arretierungsstellung verstellbar ist und die Blockiereinheit einen Bremskörper aufweist, der mittels eines Betätigungselements in Richtung auf einen Gehäusegrundkörper der Lastaufnahmeeinheit verstellbar ist, wobei der Bremskörper in der Arretierungsstellung den Tragarm kraftschlüssig an dem Gehäusegrundkörper arretiert.

Die erfindungsgemäße Hebevorrichtung weist im Wesentlichen zwei Baugruppen auf, nämlich zum einen die Lastaufnahmeeinheit, welche über an dem oder den Tragarmen angeordnete Kopplungseinheiten mit der zu demontierenden Kraftfahrzeugbaugruppe verbunden werden kann und zum anderen die Stützeinheit, welche im Bedarfsfall lösbar mit der Lastaufnahmeeinheit verbunden werden kann, wobei die Stützeinheit dann die Möglichkeit bietet, die Lastaufnahmeeinheit mit üblicherweise in Fahrzeugwerkstätten vorhandenen Hubgeräten zu verbinden. Zur Verbindung der Stützeinheit mit der Lastaufnahmeeinheit weist die Stützeinheit einen mit der Lastaufnahmeeinheit verbindbaren Anschlusskörper auf, sodass über diesen im Bedarfsfall eine stabile Verbindung zu der Lastaufnahmeeinheit hergestellt werden kann.

Im Falle der Verwendung der Lastaufnahmeeinheit in Verbindung mit einer Kraneinheit, wenn also die Verwendung einer Stützeinheit nicht erforderlich ist, kann durch die lösbare Anordnung der Lastaufnahmeeinheit an dem Anschlusskörper der Stützeinheit diese problemlos von der Lastaufnahmeeinheit getrennt werden, sodass sich eine kompakte Lastaufnahmeeinheit ergibt, die eine einfache oberseitige Entnahme einer Kraftfahrzeugbaugruppe aus dem Fahrzeug erlaubt. Über die Kranhakenaufnahme an der Lastaufnahmeeinheit kann bspw. eine demontierte Motoreinheit unter Verwendung einer Kraneinheit problemlos aus dem Fahrzeug herausgehoben werden, wobei die Lastaufnahmeeinheit ohne Stützeinheit nur einen geringen Bauraum beansprucht. Im Rahmen der Anmeldung wird dabei unter einer oberseitigen Entnahme die Entfernung von Fahrzeugkomponenten von oben aus dem Fahrzeug und unter einer unterseitigen Entnahme von unten aus dem Fahrzeug - bezogen auf dessen Gebrauchslage - verstanden.

Weiter erfindungsgemäß ist der zur Verbindung mit der Lastaufnahmeeinheit ausgebildete Anschlusskörper gegenüber der übrigen Stützeinheit neigbar. Die Neigbarkeit des Anschlusskörpers ermöglicht es, die durch den Tragarm bzw. die Tragarme aufgespannte Ebene gegenüber der zu demontierenden Baugruppe zu neigen, bis diese in der für die Entnahme notwendigen Position angeordnet ist. Über die Verschiebbarkeit der Kopplungseinheiten an den Tragarmen, wobei an den Kopplungseinheiten die Verbindung mit der zu demontierenden Baugruppe hergestellt wird, sowie über die Neigbarkeit des oder der Tragarme kann somit die Hebevorrichtung optimal gegenüber der zu demontierenden Baugruppe ausgerichtet werden, sodass sich eine zuverlässige und stabile Verbindung mit der zu demontierenden Baugruppe herstellen lässt. Im Falle einer Nutzung der Lastaufnahmeeinheit ohne Stützeinheit, nämlich im Falle der Verwendung zur oberseitigen Entfernung von Kraftfahrzeugbaugruppen ermöglicht die lösbare Anordnung der Stützeinheit diese einfach zu entfernen, sodass dann die Lastaufnahmeeinheit in einfacherer Weise gegenüber der zu demontierenden Baugruppe ausgerichtet werden kann.

Die Einstellbarkeit des Tragarms gegenüber der Stützeinheit bietet gemeinsam mit der Verlagerbarkeit der Kopplungseinheit, welche bspw. zur Aufnahme von mit dem Getriebe verbindbaren Bolzen oder mit einer Motoreinheit verbindbare Augenschrauben ausgebildet ist, die Möglichkeit, die Hebevorrichtung optimal an die zu demontierende Kraftfahrzeugbaugruppe anzupassen. Die Lastaufnahmeeinheit lässt sich durch die erfindungsgemäße Ausgestaltung der Hebevorrichtung in eine beliebige Position gegenüber der Hubeinheit und/oder Kraneinheit verstellen, sodass unterschiedliche Kraftfahrzeugbaugruppen, bspw. Getriebe unterschiedlicher Baureihen und Kraftfahrzeugtypen mit der erfindungsgemäßen Hebevorrichtung abgestützt und dann demontiert werden können. Die Verwendung der erfindungsgemäßen Hebevorrichtung erlaubt es dabei auf weitere, baugruppenspezifische Hebevorrichtungen zu verzichten, sodass mit der erfindungsgemäßen Hebevorrichtung ausgestattete Kraftfahrzeugwerkstätten auf weitere, einen erheblichen Lagerraum beanspruchende sowie kostenintensive Hebevorrichtung zur Demontage weitere Baugruppen verzichten können. Ferner ermöglicht die Nutzung der erfindungsgemäßen Hebevorrichtung den Ausbau und Einbau einer Kraftfahrzeugbaugruppe, insbesondere eines Getriebes oder Motors durch nur eine Person.

Die Schwenkbarkeit des Tragarms oder weiterer Tragarme um die Längsachse der Lastaufnahmeeinheit, welche in der Regel deckungsgleich mit der Längsachse der Kraneinheit ist oder mit dem Lastaufnahmepunkt einer Kraneinheit fluchtet, gewährleistet neben einer hohen Variabilität der Hebevorrichtung zudem, dass die auf die Lastaufnahmeeinheit wirkenden Kräfte zuverlässig von der Kraneinheit aufgenommen oder auf die mit der Lastaufnahmeeinheit verbindbare Stützeinheit und damit auf die mit der Stützeinheit verbindbare Hubeinheit übertragen werden können. Durch die Schwenkbarkeit des oder der Tragarme um die Längsachse der Lastaufnahmeeinheit und die Verschiebbarkeit der Kopplungseinheiten entlang der Tragarme kann die an den oder dem Tragarm angeordenete Kopplungseinheit an einem beliebigen Punkt auf der durch die Verschwenkbarkeit und Länge der Tragarme definierten Fläche angeordnet werden. Die zusätzliche Neigbarkeit dieser Fläche erlaubt eine optimale Anpassung an eine Vielzahl von Kraftfahrzeugbaugruppen und deren Einbausituation am Kraftfahrzeug.

Die Ausgestaltung der Neigbarkeit des Anschlusskörpers an der Stützeinheit kann grundsätzlich in beliebiger Weise ausgestaltet werden. Nach einer besonders vorteilhaften Ausgestaltung der Erfindung ist jedoch vorgesehen, dass der Anschlusskörper über eine Radialgelenklagereinheit an der Stützeinheit angeordnet ist, wobei besonders bevorzugt die Radialgelenklagereinheit ein Radialgelenklager mit einem mit der übrigen Stützeinheit verbundenen Innenring und einen mit dem Anschlusskörper verbundenen Außenring aufweist.

Die Verwendung einer Radialgelenklagereinheit stellt eine besonders einfache und zuverlässige Möglichkeit dar, den Anschlusskörper der Stützeinheit gegenüber der übrigen Stützeinheit neigbar auszugestalten. Die vorteilhafter Weise vorgesehene Verwendung eines einfachen Radialgelenklagers ermöglicht die Herstellung einer besonders kompakten, kippbaren Anordnung des Anschlusskörpers an der Stützeinheit. Darüber hinaus gewährleistet die Radialgelenklagereinheit eine zuverlässige Übertragung sämtlicher auf die Lastaufnahmeeinheit wirkenden Kräfte auf die Stützeinheit sowie auf eine mit der Stützeinheit verbundene Hubeinheit.

Die Ausgestaltung der Neigungsverstellung des Anschlusskörpers sowie eine Arretierung der eingestellten Neigung ist grundsätzlich frei wählbar. Nach einer besonders vorteilhaften Ausgestaltung der Erfindung ist jedoch vorgesehen, dass ein, bevorzugt zwei um 90° versetzt zueinander um eine Längsachse angeordnet, längeneinstellbare Neigungsversteller einenends mit dem Anschlusskörper und anderenends mit einem Grundring mit der Stützeinheit verbunden sind.

Die Verwendung derartiger Neigungsversteller zeichnet sich dabei dadurch aus, dass über die Einstellbarkeit der Länge des Neigungsverstellers der Neigungswinkel des Anschlusskörpers und damit einer mit dem Anschlusskörper verbundenen Lastaufnahmeeinheit gegenüber der Stützeinheit besonders einfach und komfortabel eingestellt werden kann. Eine Einstellung der Länge der Neigungsversteller bewirkt aufgrund der Verbindung der Neigungsversteller mit dem Anschlusskörper und einem Grundring der Stützeinheit die Einstellung eines Winkels des Anschlusskörpers und damit der mit dem Anschlusskörper verbundene Lastaufnahmeeinheit und somit letztlich einer durch einen oder mehreren Tragarme aufgespannten Ebene gegenüber der Stützeinheit.

Die Verwendung eines um 90° versetzt zu dem ersten Neigungsversteller angeordneten zweiten Neigungsversteller, ermöglicht die Einstellung eines zweiten, um 90° versetzten Winkels der Lastaufnahmeeinheit, bzw. der aufgespannten Ebene, sodass über die beiden um 90° versetzt zueinander angeordneten Neigungsversteller eine durch einen oder mehrerer Tragarme aufgespannte Ebene in Abhängigkeit von der Längenverstellbarkeit der Neigungsversteller in eine beliebige Richtung um die Längsachse der Stützeinheit nach Art einer Taumelbewegung geneigt werden kann. Die Längenveränderbarkeit der Neigungsversteller ist dabei unterschiedlich ausgestaltbar. Eine mögliche Ausgestaltung besteht in der Verwendung eines zwei gleichgerichtete Innengewinde aufweisenden Handgriffs, wobei die Innengewinde jeweils ein Verbindungsmittel aufnehmen, dass mit einem Grundring der Stützeinheit bzw. dem Anschlusskörper der Stützeinheit verbunden ist, sodass eine Verdrehung des Handgriffs eine Veränderung der Abstände der Verbindungsmittel bewirkt. Bei einer selbsthemmenden Ausgestaltung des Innengewindes kann zudem auf separate Arretierungsmittel der eingestellten Position verzichtet werden.

Die Ausgestaltung der Stützeinheit zur Verbindung mit einer Hubeinheit kann grundsätzlich in beliebiger Weise erfolgen, sofern gewährleistet ist, dass die Stützeinheit lagesicher an der üblicherweise vorhandenen Hubvorrichtung angeordnet ist. Nach einer besonders vorteilhaften Ausgestaltung der Erfindung ist jedoch vorgesehen, dass der Grundring zur koaxialen und/oder ein Kopplungskörper der Stützeinheit zur axialen Verbindung mit einem Anschlussabschnitt einer Hubeinheit ausgebildet ist.

Insbesondere die besonders vorteilhafter Weise vorgesehene Verwendung sowohl eines koaxial zu einem Anschlussabschnitt anordbaren Grundrings in Verbindung mit einem axial zu dem Anschlussabschnitt anordbaren Kopplungskörper zeichnet sich dabei dadurch aus, dass die Stützeinheit in besonders zuverlässiger Weise ortfest an der Hubeinheit positionierbar ist. Eine ortsfeste Lagerung ist insbesondere bei den hohen auftretenden Lasten und der damit einhergehenden Gefährdung im Falle einer ungewollten Verlagerung von besonderer Bedeutung, da dadurch Unfällen besonders wirksam vorgebeugt werden kann. Zudem lässt sich diese Ausgestaltung der Verbindung der Stützeinheit besonders einfach ausgestalten und ermöglicht eine einfachere Verbindung sowie Trennung der Stützeinheit von der Hubeinheit.

Die schwenkbare Lagerung der Tragarme kann grundsätzlich in einer beliebigen Art erfolgen. Nach einer vorteilhaften Ausgestaltung der Erfindung ist vorgesehen, dass an den Tragarmen angeordnete Lagerkörper verstellbar innerhalb einer Kulisse der Lastaufnahmeeinheit angeordnet sind. Die Verwendung einer Kulisse sowie eines an die Kulisse angepassten Lagerkörpers gewährleistet dabei eine besonders zuverlässige Anordnung des Tragarms an der Lastaufnahmeeinheit und damit eine besonders zuverlässige Abstützung der Tragarme sowie eine gute Übertragung der auf die Tragarme wirkenden Kräfte auf die Lastaufnahmeeinheit.

Die Ausgestaltung des Lagerkörpers, der den Tragarm mit der Lastaufnahmeeinheit verbindet und welcher bevorzugt starr mit dem Tragarm verbunden ist, ist dabei grundsätzlich frei wählbar. Besonders vorteilhafter Weise ist jedoch vorgesehen, dass sich der Lagerkörper in Längsachsenrichtung der Lastaufnahmeeinheit erstreckt und einenends über einen Rollkörper an einer koaxial zur Längsachse der Lastaufnahmeeinheit verlaufenden ringförmigen Führungsbahn und anderenends über einen an dem Lagerkörper angeordneten Lagerring verschwenkbar an der Lastaufnahmeeinheit gelagert ist, wobei der Lagerring verschwenkbar an einem Führungsbolzen angeordnet sein kann.

Gemäß dieser Ausgestaltung der Erfindung erstreckt sich die Längsachse des Lagerkörpers parallel zur Längsachse der Lastaufnahmeeinheit. Der Tragarm verläuft demnach senkrecht zur Längsachse der Lastaufnahmeeinheit und des Lagerkörpers. Mit einer - bezogen auf die Gebrauchslage - am unteren Ende des Lagekörpers angeordneten Lagerrolle stützt sich der Lagerkörper an der ringförmigen Führungsbahn in der Lastaufnahmeeinheit ab. Die Verbindung des Lagerkörpers über eine Lagerrolle in der Führungsbahn gewährleistet eine besonders einfache sowie zuverlässige Einstellbarkeit des Tragarms gegenüber der Lastaufnahmeeinheit. Zur Sicherung der Positionen des Lagerkörpers gegenüber der Lastaufnahmeeinheit weist der Lagerkörper darüber hinaus im Bereich seines der Lagerrolle gegenüberliegenden - bezogen auf die Gebrauchslage - oberen Endes einen sich senkrecht in Richtung eines Führungsbolzens erstreckenden Lagerrings auf, welcher in der Gebrauchslage den Führungsbolzen koaxial umgibt, sodass der Lagerkörper insgesamt um die Längsachse der Lastaufnahmeeinheit, bzw. den Führungsbolzen verschwenkbar, jedoch nicht gegenüber diesem verkippt werden kann, sodass eine besonders gute Kraftübertragung bei gleichzeitig hoher Positionssicherheit des Tragarms gewährleistet ist.

Die Anzahl der Tragarme der Lastaufnahmeeinheit ist grundsätzlich frei wählbar und kann entsprechend der vorgesehenen Einsatzbereiche festgelegt werden. Besonders vorteilhafter Weise weist die Lastaufnahmeeinheit drei bzw. vier Tragarme auf, die um eine Längsachse der Lastaufnahmeeinheit verstellbar gelagert sind. Die Anordnung erfolgt demnach derart, dass die Tragarme auf einer gemeinsamen koaxialen Kreisbahn um eine Längsachse der Lastaufnahmeeinheit verschwenkt werden können. Die Lagerringe der einzelnen Tragarme sind dabei jeweils derart in unterschiedlichen Nuten eines Lastabschnittes des Lagerkörpers angeordnet, sodass die Lagerringe - in Längsachsenrichtung der Lastaufnahmeeinheit betrachtet - übereinanderliegend an einem Führungsabschnitt angeordnet sind.

Gemäß dieser Ausgestaltung der Erfindung ist somit vorgesehen, dass die einzelnen Lagerringe der einzelnen Tragarme jeweils in unterschiedlichen Ebenen senkrecht zur Längsachse der Lastaufnahmeeinheit verlaufen, sodass diese besonders kompakt ausgeführt werden kann. Jeder Tragarm ist demnach einenends über einen Rollenkörper und anderenends über einen Lagerring geführt, wobei die einzelnen Lagerringe der jeweiligen Tragarme in Längsachsenrichtung betrachtet im Abstand zueinander angeordnet sind.

Weiter erfindungsgemäß ist vorgesehen, dass an dem Tragarm eine Blockiereinheit angeordnet ist, die zwischen einer den Tragarmen zur Verschwenkung freigebenden Freigabestellung und einer den Tragarm an der Lastaufnahmeeinheit festlegende Arretierungsstellung verstellbar ist.

Demgemäß weist der Tragarm eine Blockiereinheit auf, welche es ermöglicht, die eingestellte Position des Tragarms, d. h. die gegenüber der Lastaufnahmeeinheit verschwenkte Position zuverlässig festzulegen. Hierdurch kann die Betriebssicherheit in besonderer Weise gesteigert werden, nachdem die eingestellte Position des oder der Tragarme, welche zur Entfernung der Kraftfahrzeugbaugruppe erforderlich ist, zuverlässig gesichert wird.

Die ortsfest an dem Tragarm anordbare Blockiereinheit ermöglicht eine zuverlässige Festlegung der Tragarme an der Lastaufnahmeeinheit. Wesentlich für die Blockiereinheit der erfindungsgemäßen Hebevorrichtung ist, dass diese einen Bremskörper aufweist, der mittels eines Betätigungselements, in Richtung auf einen Gehäusegrundkörper der Lastaufnahmeeinheit verstellbar ist, wobei der Bremskörper in der Arretierungsstellung die Tragarme kraftschlüssig am Gehäusegrundkörper arretiert.

Die Blockiereinheit der erfindungsgemäßen Hebevorrichtung weist demgemäß einen Bremskörper auf, der mittels eines Betätigungselements, zwischen einer Freigabestellung und einer Arretierungsstellung verstellbar ist. In der Freigabestellung erfolgt über den Spannhebel eine Positionierung des Bremskörpers in einer Position, in der dieser eine freie Verschwenkung des mit der Blockiereinheit verbundenen Tragarms ermöglicht. In der Arretierungsstellung hingegen erfolgt über die Betätigungseinheit eine Verstellung des Bremskörpers derart, dass dieser kraftschlüssig an einem Gehäusegrundkörper der Lastaufnahmeeinheit anliegt, sodass damit eine weitere Verstellung des Tragarms blockiert wird. Die kraftschlüssige Verbindung des Bremskörpers mit dem Gehäusegrundkörper weist dabei den Vorteil auf, dass der Tragarm grundsätzlich in einer beliebigen Winkelposition festgelegt werden kann. Über die Ausgestaltung des Bremskörpers und dessen Kontaktfläche mit dem Gehäusegrundkörper kann dabei in geeigneter Weise die Kraft bestimmt werden, mittels der die Betätigungseinheit betätigt werden muss, um diesen in die Arretierungsstellung zu verstellen.

Nach einer besonders vorteilhaften Ausgestaltung der Erfindung ist ferner vorgesehen, dass das Betätigungselement als Spannhebel ausgebildet ist.

Nach einer besonders vorteilhaften Ausgestaltung der Erfindung ist ferner vorgesehen, dass die Blockiereinheit eine zwischen einer Freigabeposition und einer Rastposition verstellbare Rasteinheit aufweist, die das Betätigungselement, insbesondere den Spannhebel, in der Arretierungsstellung an einem Grundkörper der Blockiereinheit lösbar verrastet. Die Verwendung einer Rasteinheit gewährleistet in besonders zuverlässiger Weise, dass die eingestellte Arretierungsposition der Blockiereinheit und damit die Arretierungsstellung des Tragarms gegenüber der Lastaufnahmeeinheit im Betrieb beibehalten wird. Einer versehentlichen Auflösung der Verbindung, durch die eine ungewollte Verschwenkung des Tragarms erfolgen kann, wird durch diese Ausgestaltung der Blockiereinheit in besonders zuverlässiger Weise verhindert. Die Lösbarkeit der Rasteinheit gewährleistet dabei im Bedarfsfall eine einfache Auflösung der Arretierungsstellung, sodass dann der Tragarm frei verschwenkt werden kann. Nach einer besonders vorteilhaften Weiterbildung der Erfindung ist dabei vorgesehen, dass die Rasteinheit in Richtung auf die Rastposition vorgespannt ist. Eine entsprechende

Vorspannung gewährleistet in besonders zuverlässiger Weise, dass ein in der Arretierungsstellung angeordnetes Betätigungselement, insbesondere ein Spannhebel, in dieser Position durch die Rasteinheit selbsttätig verrastet ist. Durch die Vorspannung, bspw. durch eine geeignete Schraubendruckfeder, die einen Rastkörper in eine Rastaufnahme an dem Spannhebel verstellt, kann ohne vorherige Betätigung gewährleistet werden, dass der Spannhebel in der Arretierungsstellung automatisch verrastet ist.

Ein Übertragen der Bewegung des Spannhebels auf den Bremskörper kann grundsätzlich in beliebiger Weise erfolgen. Nach einer besonders vorteilhaften Ausgestaltung der Erfindung ist jedoch vorgesehen, dass der Spannhebel schwenkbar an dem Grundkörper angeordnet ist und mit einer Außenkontur an einer linear verschieblich an dem Grundkörper angeordneten, mit dem Bremskörper verbundenen Schubstange in Eingriff befindlich ist. Gemäß dieser Weiterbildung der Erfindung weist der schwenkbar gelagerte Spannhebel eine Außenkontur auf, welche an einer linear verschieblich an den Grundkörper angeordneten, bzw. an einer Rolle der linear verschieblichen Schubstange anliegt. Die Außenkontur ist dabei derart ausgestaltet, dass eine Verschwenkung des mit der Schubstange bzw. einer an der Schubstange angeordneten Rolle in Kontakt befindlichen Spannhebels eine Längsverschiebung der Schubstange innerhalb der Grundkörpers bewirkt. Diese Ausgestaltung der Erfindung stellt somit eine besonders einfache Möglichkeit zur Übertragung der Schwenkbewegung des Schwenkhebels auf den Bremskörper dar, welcher in der Arretierungsstellung aufgrund der Position des Schwenkhebels zuverlässig mit einer geeigneten Kraft an einem Gehäusegrundkörper der Lastaufnahmeeinheit anliegt, sodass eine Weiterverschwenkung des Tragarms blockiert ist. Diese Ausgestaltung der Erfindung zeichnet sich durch ihre Einfachheit und Kompaktheit sowie Zuverlässigkeit aus. Darüber hinaus ermöglicht diese Ausgestaltung der Erfindung in besonders einfacher Weise, die Blockiereinheit mit einer vorteilhafter Weise vorgesehenen Rasteinheit zu versehen.

Die Ausgestaltung der Bedienung der Rasteinheit, d. h. insbesondere die Art der Betätigung derart, dass diese aus ihrer Rastposition in eine Freigabeposition überführt wird, sodass dann eine Verlagerung des Spannhebels erfolgen kann, ist grundsätzlich frei wählbar. Nach einer besonders vorteilhaften Ausgestaltung der Erfindung ist jedoch vorgesehen, dass die Rasteinheit mittels eines Spannhebels aus der Rastposition in die Freigabeposition verstellbar ist, wobei der Spannhebel in der Arretierungsstellung parallel zum Bedienhebel verläuft. Gemäß dieser Ausgestaltung der Erfindung ist vorgesehen, dass sich der Bedienhebel der Rasteinheit, mittels dem die Rasteinheit aus der Arretierungsstellung in die Freigabeposition verlagert werden kann, parallel zudem Spannhebel erstreckt, wenn dieser in der der Arretierungsstellung zugeordneten Position angeordnet ist. Eine entsprechende Ausrichtung des Bedienhebels gegenüber dem Spannhebel ermöglicht eine Ein-Hand-Bedienung der Blockiereinheit, wobei bspw. mit einem Daumen der Bedienhebel der Rasteinheit verlagert und anschließend der Spannhebel mit der übrigen Hand verstellt werden kann.

Die Einstellung der Hebevorrichtung, d. h. die Ausrichtung des Tragarmes oder der Tragarme an der Führungseinheit sowie im Fall der Verwendung mit einer Hubeinheit eine ggf. vorgesehene Neigung der Aufnahmeeinheit gegenüber der Stützvorrichtung hat grundsätzlich unter Berücksichtigung der zu demontierenden Kraftfahrzeugbaugruppe zu erfolgen, wobei an dieser üblicherweise Lagerpunkte vorgesehen sind, an denen eine Abstützung bzw. Anhebung der zu demontierenden Kraftfahrzeugbaugruppe erfolgen kann. Die Einstellung der Tragarme kann bspw. über eine rein optische Ausrichtung durch den Benutzer erfolgen, wobei diese dann unmittelbar an der zu demontierenden Kraftfahrzeugbaugruppe, üblicherweise in einem beengten Arbeitsumfeld erfolgen muss. Nach einer besonders vorteilhaften Ausgestaltung der Erfindung ist jedoch vorgesehen, dass an der Führungseinheit eine Winkelskala und an dem Tragarm ein an der Winkelskala ausrichtbares Zeigerelement angeordnet ist.

Gemäß dieser Ausgestaltung der Erfindung lässt sich der Tragarm über ein Zeigerelement und die an der Führungseinheit angeordnete Winkelskala in einfacher Weise in einer vorbestimmten Position festlegen. Somit ist es möglich, bei Vorliegen kraftfahrzeugbaugruppenspezifischer Daten, eine Ausrichtung der Tragarme unabhängig vom Fahrzeug vornehmen zu können, so dass dann die Hebevorrichtung in der eingestellten Position unmittelbar, ohne weitere Anpassungen, an der zu demontierenden Kraftfahrzeugbaugruppe angeordnet und mit dieser verbunden werden kann. Idealerweise liegen für jede Kraftfahrzeugbaugruppe spezifische Daten vor, die vorab eine entsprechende Einstellbarkeit der Tragarme über das Zeigerelement und die Winkelskala erlauben.

Besonders bevorzugt ist ferner vorgesehen, dass der Tragarm eine Längenskala und die Kopplungseinheit ein Zeigerelement zur Ausrichtung der Kopplungseinheit an dem Tragarm aufweist. Analog zur Ausrichtung des Tragarms an der Winkelskala erlaubt die Verwendung einer Längenskala sowie eines an der Kopplungseinheit angeordneten Zeigerelements die Längsausrichtung der Kopplungseinheit an dem Tragarm, so dass bei Vorliegen entsprechender Daten, sowohl die Tragarme als auch die Kopplungseinheiten unabhängig von umständlichen Versuchen an dem zu demontierenden Kraftfahrzeugbauteil eingestellt werden können. Idealerweise liegen für alle Kraftfahrzeugbaugruppen Winkeldaten für die Tragarme und Längendaten für die Kopplungseinheiten vor, so dass es einem Nutzer die besonders komfortable Möglichkeit bietet, die Hebevorrichtung bereits im Vorfeld an jede zu demontierende Baugruppe anzupassen und dann ohne Nachjustierung zu benutzen.

Nach einer besonders vorteilhaften Ausgestaltung der Erfindung weisen dabei bspw. bei dem Einsatz mehrerer Tragarme diese eine voneinander unterschiedliche Kennzeichnung, insbesondere eine voneinander abweichende Farbgebung auf. Eine abweichende Farbgebung, welche alternativ oder zusätzlich zu einer bspw. vorzunehmenden Nummerierung oder sonstigen unterschiedlichen Kennzeichnungen der Tragarme, bspw. mittels Buchstaben verwendet werden kann, erlaubt bei der Verwendung der Daten der Kraftfahrzeugbaugruppen in aufbereiteter Form eine besonders komfortable Anpassung der Lastaufnahmeeinheit. So können bspw. bei der Verwendung einer voneinander abweichenden Farbgebung für die Tragarme auf den Daten der Kraftfahrzeugbaugruppen basierende farbige Tabellen bereitgestellt werden, welche eine den jeweiligen Farben zugeordnete Winkelposition sowie eine Längsposition der Kopplungseinheiten der jeweiligen Tragarme aufzeigen. Diese Ausgestaltung der Erfindung zeichnet sich insbesondere im Werkstattbetrieb aus, da sie besonders anwendungsfreundlich ist und Fehleinstellungen in besonders einfacher Weise vorbeugt. Bei der Verwendung von bspw. vier Tragarmen weist jeder von diesen eine unterschiedliche Farbe auf. Eine kraftfahrzeugbaugruppenspezifische Datenkarte weist für jede Farbe eine Winkelposition und eine Längsposition auf, so dass die Lastaufnahmeeinheit schnell und effektiv an die jeweilige Kraftfahrzeugbaugruppe anpassbar ist.

Die Kopplungseinheit, welche zur Verbindung mit der Kraftfahrzeugbaugruppe dient, weist nach einer vorteilhaften Weiterbildung der Erfindung eine seitlich von dem Tragarm angeordnete Aufnahmeöffnung zur Aufnahme eines Kopplungsadapters auf, wobei der Kopplungsadapter in der Aufnahmeöffnung einspannbar oder in die Aufnahmeöffnung einschraubbar ist. Die Aufnahmeöffnung erlaubt es, an die jeweilige Kraftfahrzeugbaugruppe angepasste Adapter aufzunehmen, welche eine optimale Abstützung oder hängende Aufnahme der jeweiligen Kraftfahrzeugbaugruppe ermöglichen. Die Kopplungsadapter, bspw. Stufenbolzen oder Augenschrauben, sind dabei in der Aufnahmeöffnung einspannbar bzw. in diese einschraubbar, so dass eine gute Lagesicherung der Kopplungsadapter gewährleistet ist. Darüber hinaus ermöglicht die seitliche Anordnung der Aufnahmeöffnung an der Kopplungseinheit eine besonders flache Bauweise und zudem im Falle der nach einer vorteilhaften Weiterbildung der Erfindung vorgesehenen Ausgestaltung der Kopplungseinheit derart, dass diese sowohl mit einer einerseits als auch mit einer andererseits des Tragarms angeordneten Aufnahmeöffnung längsverschieblich an dem Tragarm gelagert sind, eine hohe Variabilität der Hebevorrichtung.

Unter der einerseits als auch andererseits erfolgenden Anordnung der Kopplungseinheit wird dabei die Möglichkeit verstanden, die Kopplungseinheit wenden zu können, d. h. von dem Tragarm abziehen und so verwenden zu können, dass in Abhängigkeit von der Aufschieberichtung die Aufnahmeöffnung sowohl links als auch rechtsseitig - bezogen auf die Gebrauchslage - des Tragarms angeordnet sein kann. Hierdurch erhöht sich die Variabilität der Hebevorrichtung in ergänzender Weise, nachdem der Schwenkbereich der Tragarme, insbesondere zweier benachbarter Tragarme auch davon abhängt, ob die Aufnahmeöffnung der Kopplungseinheiten voneinander abgewandt oder einander zugewandt sind. Die Ausrichtung der Kopplungseinheiten kann dabei ebenfalls über geeignete Datentafeln vorgegeben werden, so dass dem Nutzer eine einfache Anpassbarkeit der Hebevorrichtung gegeben ist. Die Wendemöglichkeit der Kopplungseinheit bietet in Verbindung mit einer gegenüber dem Tragarm außermittigen Anordnung des Zeigerelements an der Kopplungseinheit ferner die Möglichkeit, an dem Tragarm eine doppelte Skalierung, d. h. zwei benachbart zueinander angeordnete Längenskalen anzuordnen.

Zur Festlegung der Kopplungseinheit in der eingestellten Position weist diese dabei nach einer besonders vorteilhaften Ausgestaltung der Erfindung ein Arretierungsmittel, insbesondere einem Arretierungsbügel auf, so dass einer Verschiebbarkeit und einer Störung besonders zuverlässig vorgebeugt wird. Der Arretierungsbügel verspannt dabei die Kopplungseinheit an dem Tragarm.

Ein Ausführungsbeispiel der Erfindung wird nachstehend mit Bezug auf die Zeichnungen erläutert. In den Zeichnungen zeigen:
- Fig. 1a: eine perspektivische Ansicht einer Hebevorrichtung mit einer Lastaufnahmeeinheit mit vier Tragarmen und einer Stützeinheit;
- Fig. 1b: eine Schnittansicht der Hebevorrichtung von Fig. 1a;
- Fig. 1c: eine perspektivische Ansicht einer von der Stützeinheit getrennten Lastaufnahmeeinheit;
- Fig. 1d: eine Teilexplosionsdarstellung der Hebevorrichtung von Fig. 1a;
- Fig. 2: eine Explosionsdarstellung einer Zentraleinheit der Lastaufnahmeeinheit;

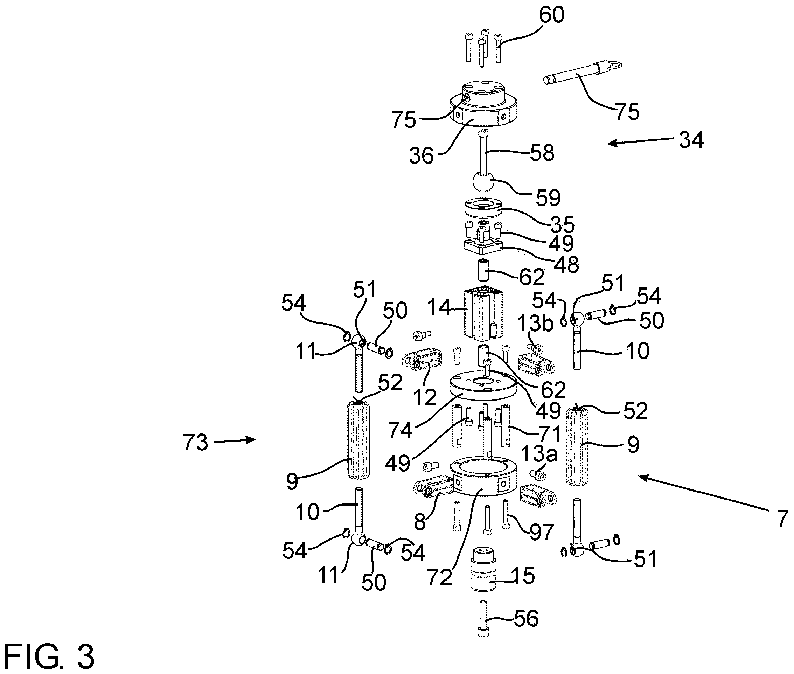

- Fig. 3: eine Explosionsdarstellung der Stützeinheit;
- Fig. 4: eine Explosionsdarstellung eines Tragarms mit daran angeordneter Blockiereinheit;
- Fig. 5a: eine perspektivische Darstellung der Blockiereinheit von Fig. 4;
- Fig. 5b: eine Explosionsdarstellung der Blockiereinheit von Fig. 4;
- Fig. 6a: eine erste Schnittansicht der Blockiereinheit in einer Freigabestellung;
- Fig. 6b: eine zweite Schnittansicht der Blockiereinheit in der Freigabestellung;
- Fig. 7a: eine erste Schnittansicht der Blockiereinheit in der Arretierungsstellung und
- Fig. 7b: eine zweite Schnittansicht der Blockiereinheit in der Arretierungsstellung.

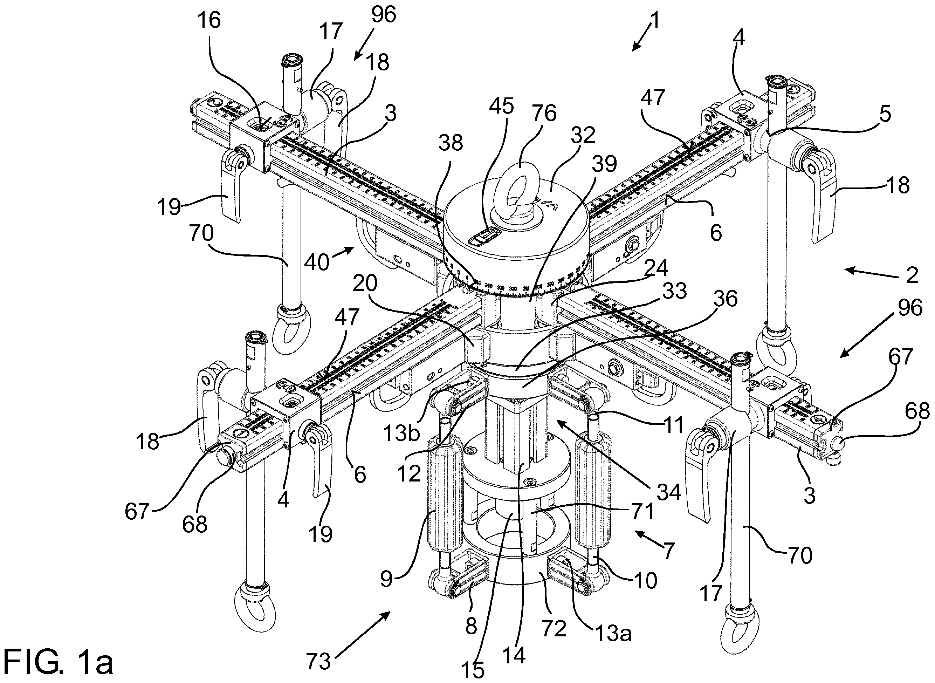

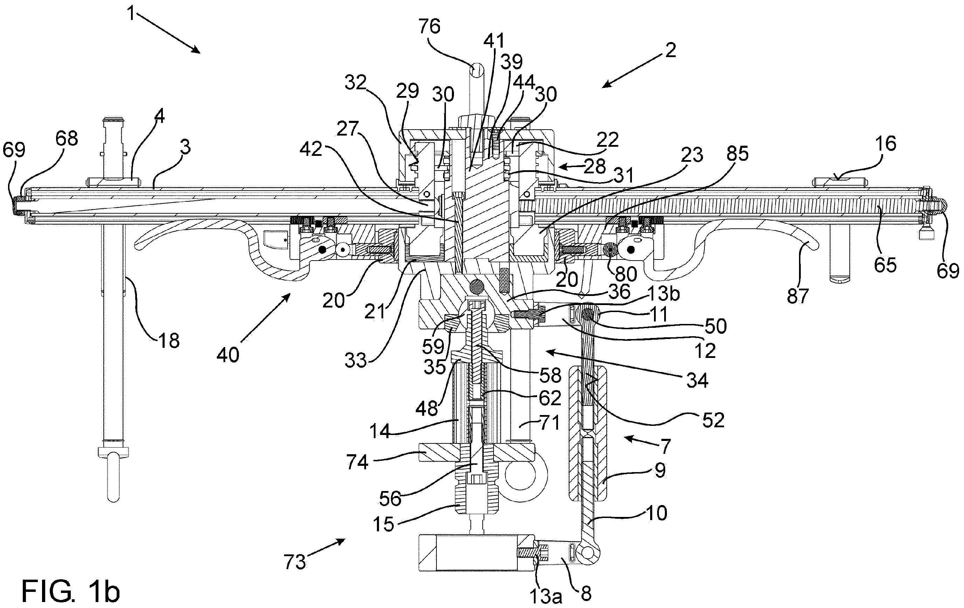

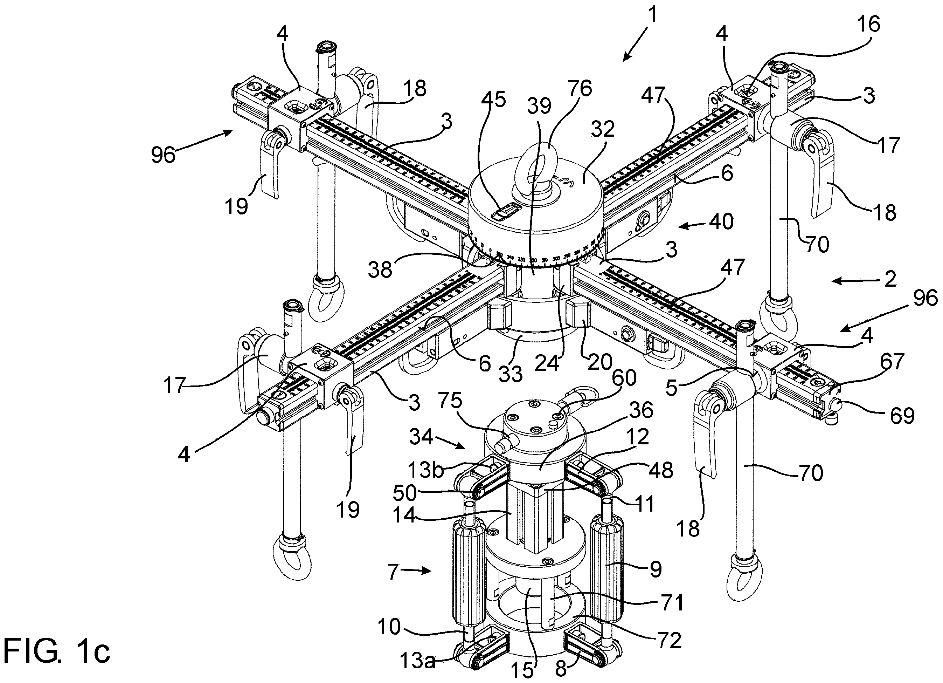

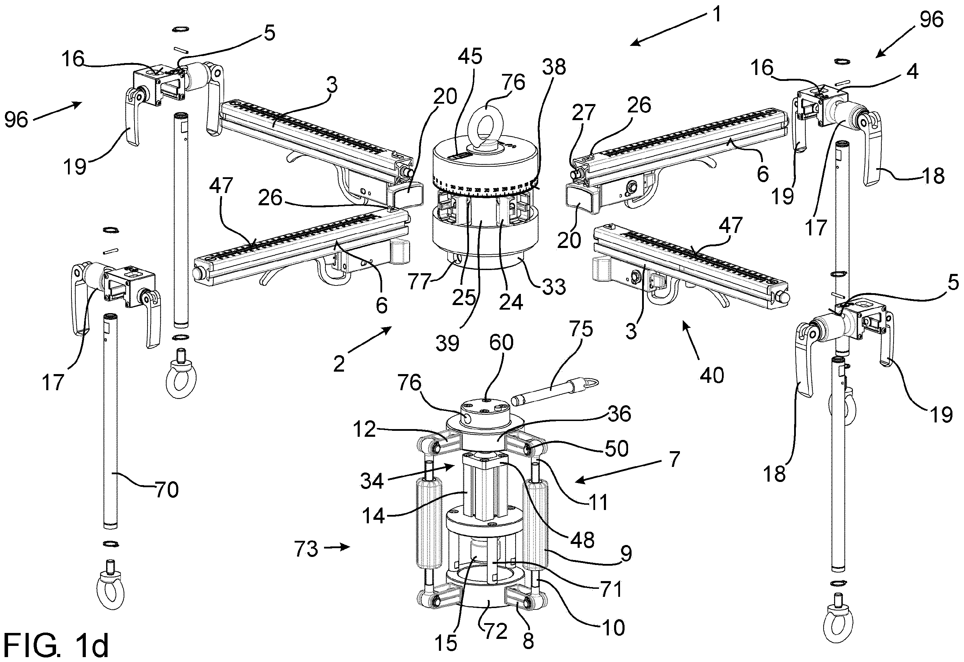

In den Figuren 1a bis 1d ist eine Hebevorrichtung 1 dargestellt, welche in einer Kraftfahrzeugwerkstatt als Getriebeheber zur Demontage einer hier nicht dargestellten Getriebeeinheit eines Kraftfahrzeugs verwendbar ist. Zur Verbindung mit einer Getriebeeinheit weist die Hebevorrichtung 1 eine Lastaufnahmeeinheit 2 auf, welche in dem dargestellten Ausführungsbeispiel vier Tragarme 3 aufweist. Die Tragarme 3 sind an einer zentralen Führungseinheit der Lastaufnahmeeinheit 2 um einen Führungsbolzen 39 verschwenkbar angeordnet. Die Lastaufnahmeeinheit 2 ist ihrerseits über einen Gehäusegrundkörper 33 lösbar mit einer neig- bzw. kippbaren Oberschale 36 einer Stützeinheit 73 verbunden, mittels derer die Hebevorrichtung 1 auch mit einer hier nicht dargestellten, üblicherweise in Kraftfahrzeugwerkstätten vorhandenen Hubeinheit verbindbar ist. Hierzu weist die Stützeinheit 73 einen koaxial anordbaren Grundring 72 sowie einen axial anordbaren Kopplungskörper 15 auf, die gemeinsam an einer entsprechenden Aufnahme einer Hubeinheit angeordnet werden können und eine stabile Anordnung der Hebevorrichtung gewährleisten.

Die verschwenkbare Anordnung der Tragarme 3 ermöglicht es, die Tragarme 3 zueinander bspw. in eine entsprechend der zu demontierenden Getriebeeinheit notwendige Position zu verstellen. Zur verstellbaren Lagerung der Tragarme 3 sind diese an ihren dem Führungsbolzen 39 zugewandten Enden mit einem in einer zentralen Führungseinheit verstellbar angeordneten Lagerkörper 23 verbunden. Die Verbindung der Lagerkörper 23 mit den Tragarmen 3 erfolgt dabei über einen Gewindeabschnitt 27 eines sich axial durch den Tragarm 3 erstreckenden Zentralstabs 65, wobei der Gewindeabschnitt 27 an dem dem Führungsbolzen 39 zugewandten Ende des Tragarms 3 in den Lagerkörper 23 einschraubbar ist. An ihren den Lagerkörpern 23 abgewandten Enden sind die Zentralstäbe 65 über einen an einem Verschlusskörper 67 anliegenden Sicherungsring 68 an den Tragarmen 3 festgelegt. Eine Verschlusskappe 69 bedeckt den Sicherungsring 68.

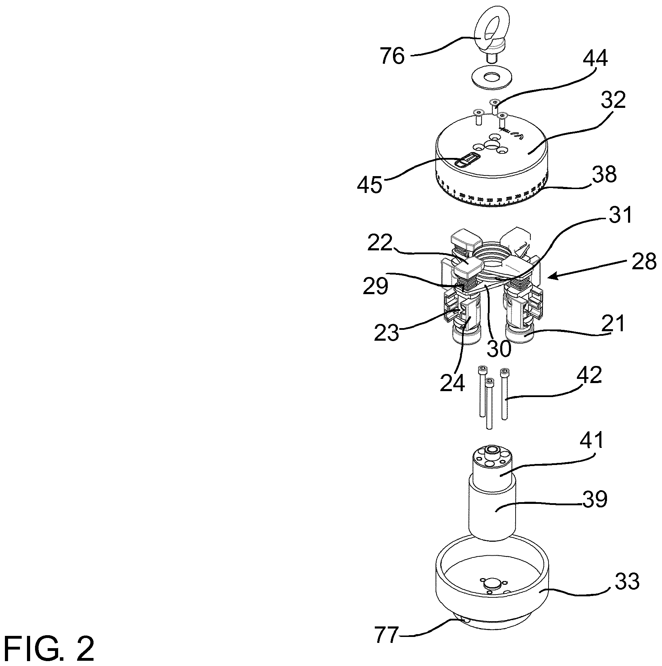

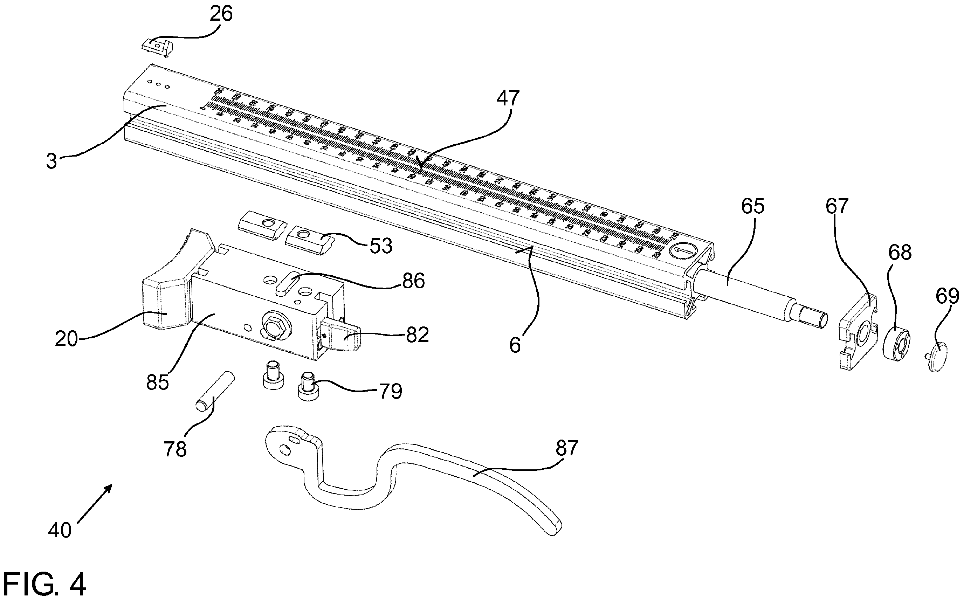

Eine weitere Lagesicherung des Lagerkörpers 23 an dem Tragarm 3 erfolgt über zwei seitlich an dem Tragarm 3 angeordnete Halteschalen 24, deren Befestigungsschrauben 25 sich durch eine Durchgangsöffnung in dem jeweiligen Lagerkörper 23 erstrecken. Die Tragarme 3 weisen darüber hinaus oberseitig angeordnete Ausnehmungen zur Aufnahme eines Zeigerelements 26 auf, welche ortsfest mit dem Tragarm 3 verbunden sind (vgl. Fig. 2 und 4).

Der Lagerkörper 23 weist an seiner Unterseite - bezogen auf die Einbau- und Gebrauchslage - eine Rolle 21 auf, welche in einer koaxial zum Führungsbolzen 39 verlaufenden Führungsbahn des Gehäusegrundkörpers 23 der Führungseinheit gelagert ist. An seinem der Rolle 21 gegenüberliegenden Ende weist der Lagerkörper 23 einen mehrere Nuten 29 aufweisenden Rastabschnitt 28 auf. Die Nuten 29 dienen zur Aufnahme eines Lagerrings 30, wobei bei den vier verwendeten Tragarmen 3 die Lagerringe 30 jeweils - in Längsachsenrichtung des Lagerkörpers betrachtet - in voneinander abweichenden, übereinanderliegenden Nuten 29 angeordnet sind.

Die übereinanderliegende Anordnung der Lagerringe 30 erlaubt somit deren - in Längsachsenrichtung des Führungsbolzens 39 betrachtet - übereinanderliegende koaxiale Anordnungen an einem Führungsabschnitt 41 des Führungsbolzens 39. Die in Längsachsenrichtung zwischen den Lagerringen 30 angeordneten Zwischenringe 31 gewährleisten dabei eine reibungsfreie Verstellung der Tragarme 3 an der Führungseinheit. Die Tragarme 3 können zudem über einen an einer Unterseite der Tragarme 3 anliegenden Lagerring, der an einem umlaufenden Steg des Gehäusegrundkörpers 33 der Führungseinheit befestigt ist, in jeder einstellbaren Position abgestützt werden. Die Tragarme 3 sind darüber hinaus noch über Lagerkappen 22, die an dem der Rolle 21 gegenüberliegenden Ende auf den Rastabschnitt 28 aufgesteckt sind, an einer Innenseite eines Gehäusedeckels 32 der Führungseinheit geführt.

Der Gehäusedeckel 32, der durch seine beabstandete Anordnung zum Gehäusegrundkörper 33 eine schlitzförmige Kulisse für die Tragarme 3 bildet, ist über Befestigungsschrauben 44 mit dem Lagerbolzen 39 ortsfest verschraubt. Darüber hinaus weist der Gehäusedeckel 32 an seinem Umfang eine Winkelskala 38 sowie einen Indikator 45 auf. Das Zeigerelement 26 liegt an der Winkelskala 38 an, sodass über das Zeigerelement 26 eine Einstellbarkeit der farblich unterschiedlichen Tragarme 3 in einer vorher festgelegten Position möglich ist.

Zur Arretierung der Tragarme 3 in der eingestellten Position gegenüber dem Gehäusegrundkörper 33 ist an den Tragarmen 3 jeweils eine Blockiereinheit 40 ortsfest angeordnet. Die Blockiereinheiten 40 weisen jeweils einen Bremskörper 20 auf, welcher gegenüber einem mit dem Tragarm 3 verbundenen Grundkörper 85 der Blockiereinheit 40 verstellbar ist. Der Bremskörper 20 mit seinem daran angeordneten Bremsklotz 43 ist dabei über ein an dem Grundkörper 85 schwenkbar gelagerten Spannhebel 87 zwischen einer Freigabestellung und einer Arretierungsstellung verstellbar.

In der Arretierungsstellung liegt der Bremsklotz 43 des Bremskörpers 20 kraftschlüssig an einer Außenseite des Gehäusegrundkörpers 33 an, wobei aufgrund der Anpresskraft eine Verschwenkbarkeit des Tragarms 3 blockiert ist. Der Spannhebel 87 ist zur kraftschlüssigen Anordnung des Bremsklotzes 43 an der Außenseite des Gehäusegrundkörpers 33 zwischen einer der Arretierungsstellung und der Freigabestellung zugeordneten Positionen verstellbar. In der Arretierungsstellung übt der Spannhebel 87 mit seiner Außenkontur Druck auf eine an einer Schubstange 53 angeordnete Rolle 80 auf. Die linear an dem Grundkörper 85 verstellbar angeordnete Schubstange 53 ist an ihrem der Rolle 80 gegenüberliegenden Ende mit dem Bremskörper 20 verbunden, wobei in Nuten 93 an dem Grundkörper 85 eingreifende Stege 92 an dem Bremskörper 20 die Verstellung in Richtung auf den Grundkörper 85 begrenzen. In der Arretierungsstellung presst somit der Spannhebel 87 den Bremsklotz 43 über die Schubstange 53 an den Gehäusegrundkörper 33, wodurch der Tragarm 3 arretiert ist.

Zur Lagerung des Spannhebels an dem Grundkörper 85 erstreckt sich ein Zylinderstift 78 durch eine Öffnung 89 an dem Grundkörper 85 und eine Öffnung 90 an dem Spannhebel 87. Zur Arretierung des Spannhebels 87 in der Arretierungsstellung weist eine Rasteinheit 98 der Blockiereinheit 40 einen Zylinderstift 57 auf, der durch eine Druckfeder 64 in Richtung auf den Spannhebel 87 vorgespannt ist. In der Arretierungsstellung greift der Zylinderstift 57, welcher innerhalb einer Öffnung 88 an dem Grundkörper 85 angeordnet ist, in ein Langloch 91 an dem Spannhebel 87 ein und blockiert damit eine Verschwenkung des Spannhebels 87 um seine Schwenkachse. Die Druckfeder 64 stützt sich dabei an seinem dem Zylinderstift 57 gegenüberliegenden Ende an einem Schraubverschluss 61 ab, der unter Zwischenschaltung einer Scheibe 63 in die Öffnung 88 an dem Grundkörper 85 eingeschraubt ist.

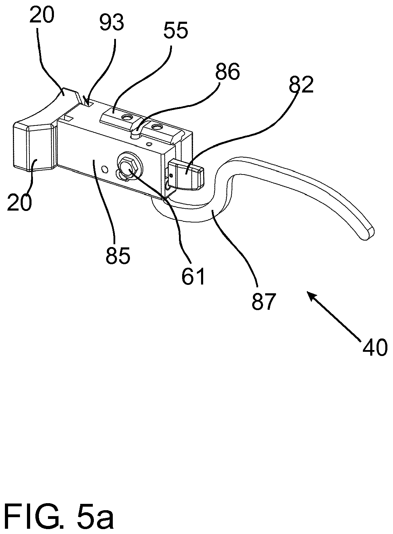

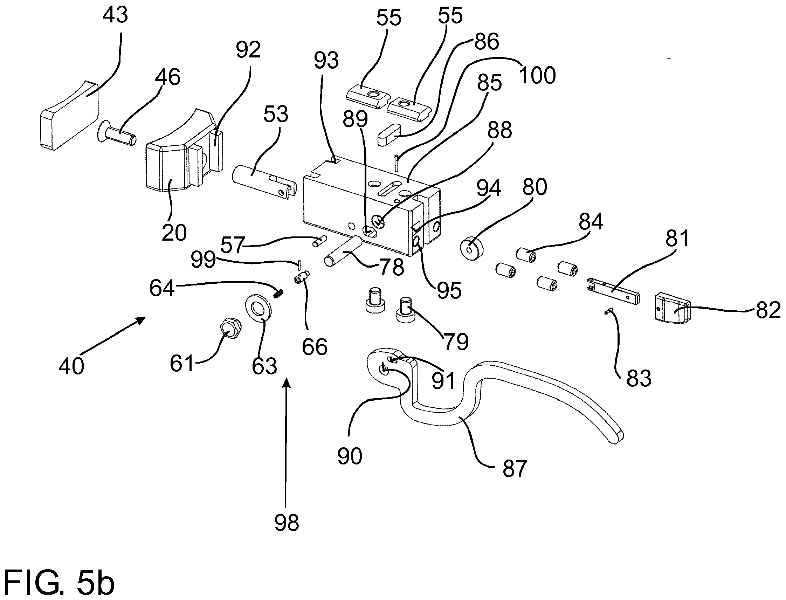

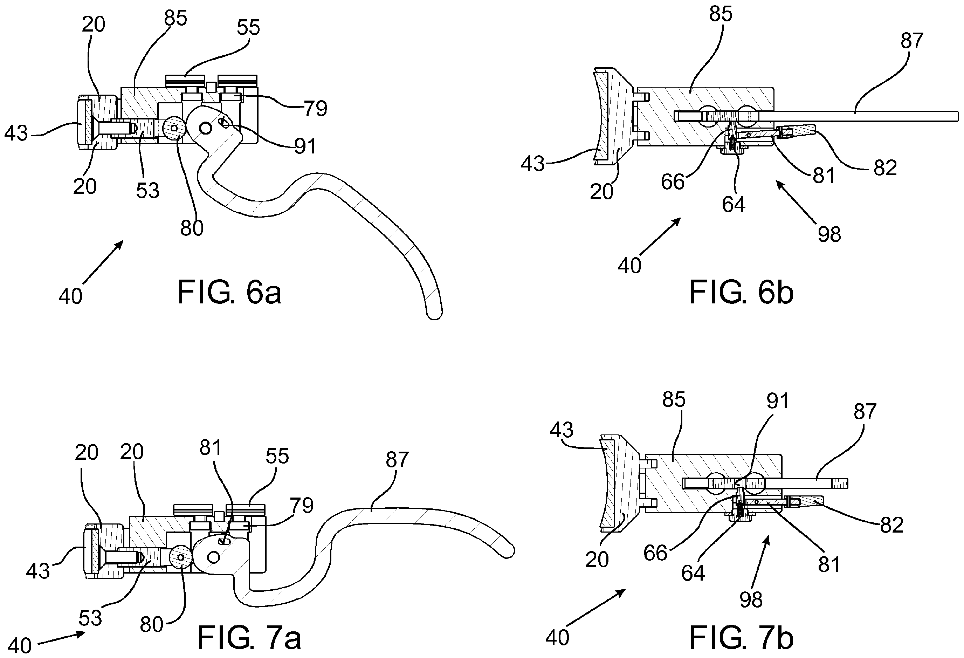

Zur Entriegelung der Blockiereinheit 40 dient ein in einem Durchgang 94 des Grundkörpers 85 angeordneter Hebel 81, der über ein Zylinderstift 100 schwenkbar an dem Grundkörper 85 gelagert ist und über einen Bolzen 99 mit dem Zylinderstift 66 verbunden ist. Durch eine Betätigung des Hebels 81 über einen an diesem mittels eines Spannstifts 83 angebrachten Taster 82 wird der Zylinderstift 66 aus dem Langloch 91 entgegen der durch die Druckfeder 64 aufgebrachten Vorspannung aus dem Langloch 91 herausbewegt, sodass dann der Spannhebel 87 dann aus der Arretierungsstellung in die Freigabestellung verschwenkbar ist (vgl. Fig. 4-7b).

Zur Anordnung der Blockiereinheit 40 an dem Tragarm 3 dienen zwei an dem Grundkörper 85 mittels Schrauben 79 befestigte Nutensteine 55 sowie eine Passfeder 86. Die Lagerung der Rolle an der Schubstange 53 erfolgt über einen Zylinderstift 57. In Bohrungen 95 angeordnete Gewindestifte 84 dienen zur Fixierung der Bauteile. Der Bremskörper 20 ist mittels einer Befestigungsschraube 42 an der Schubstange 53 befestigt.

Neben einem Indikator 45, welcher bspw. ein Fahrzeug in einer Draufsicht zeigt und so in einfacher Weise eine Ausrichtung der eingestellten Hebevorrichtung 1 gegenüber dem Fahrzeug ermöglicht, sodass bspw. eine optimale Anpassung an die Lastaufnahmepunkte des zu demontierenden Getriebes besteht, weisen die Tragarme 3 zwei nebeneinander angeordnete Längenskalen 47 auf, welche die Ausrichtung einer längsverschieblich an den Tragarmen 3 gelagerten Kopplungseinheit 96 ermöglicht. Die Kopplungseinheiten 96 weisen hierbei eine an den Querschnitt der Tragarme 3 angepasste Hülse 4 mit einer außermittig gegenüber dem Tragarm 3 an der Kopplungseinheit 96 angeordneten Öffnung 16 auf, die in Abhängigkeit von ihrer Aufschieberichtung auf den Tragarm 3 eine exakte Ausrichtung der Hülse 4 an einer der beiden Längenskalen 47 ermöglicht, wobei hierzu die Öffnung 16 auch mit einem Zeiger versehen sein kann. Die Festlegung der in einer Nut 6 der Tragarme 3 geführten Hülsen 4 in einer eingestellten Position erfolgt über einen Arretierungsbügel 19, der die Hülse 4 an dem Tragarm 3 festklemmt.

Zur Verbindung der Kopplungseinheit 96 mit einem zu demontierenden Getriebe weist die Kopplungseinheit 96 eine seitlich angeordnete Aufnahmeöffnung 5 auf, welche beispielsweise auch zur Aufnahme der hier dargestellten Haltestangen 70 ausgelegt ist, über deren endseitigen Ösen ein Kraftfahrzeugbauteil angehängt werden kann. Zur Festlegung der Haltestangen 70 in der Aufnahmeöffnung 5 dient ein Spannelement 17, welches über einen Spannhebel 18 in Richtung auf die Haltestange 70 verschiebbar ist, sodass diese ortsfest in der Aufnahmeöffnung 5 gesichert sind.

Der Führungsbolzen 39 ist über Befestigungsschrauben 42 ortsfest mit dem Gehäusegrundkörper 33 der Führungseinheit verbunden. Der Gehäusegrundkörper 33 ist wiederum lösbar mit einer Radialgelenk-Lagereinheit 34 der Stützeinheit 73 verbindbar. Zur Verbindung des Gehäusegrundkörpers 33 mit der Radialgelenk-Lagereinheit 34 weist der eine zentrale Öffnung aufweisende Gehäusegrundkörper 33 eine quer zur Längsachsenrichtung verlaufende Öffnung 77 auf, die zur Aufnahme eines Sicherungsbolzens 75 ausgebildet ist, der sich in montierter Lage der Führungseinheit an der Stützeinheit 73 durch die Öffnung 77 an dem Gehäusegrundkörper 33 und eine Öffnung 76 an einem Absatz der Oberschale 36 erstreckt. Die Oberschale 36 und die Unterschale 35 sind über Befestigungsschrauben 60 aneinander fixiert. In dem zwischen der Oberschale 36 und der Unterschale 35 gebildeten Gehäuse der Radialgelenk-Lagereinheit 34 ist ein Radialgelenklager 59 angeordnet. Ein Außenring des Radialgelenklagers 59 ist zwischen der Oberschale 36 und der Unterschale 35 fixiert. Ein Innenring des Radialgelenklagers 59 ist über eine Befestigungsschraube 58 an einem Lagerungsabschnitt einer Lageraufnahme 48 der Stützeinheit 73 befestigt. Die Befestigungsschraube 58 erstreckt sich dabei durch die Lageraufnahme 48 in eine an einer Tragstange 14 angeordnete Gewindehülse 62. Die Oberschale 36 der Radialgelenk-Lagereinheit 34 sowie die mit der Radialgelenk-Lagereinheit 34 verbundene Lastaufnahmeeinheit 2 ist somit gegenüber einer Längsachse der Stützeinheit 73 neigbar.

Die Stützeinheit 73 weist die zentrale Tragstange 14 auf, an der die Lageraufnahme 48 mittels Befestigungsschrauben 49 sowie mittels der in eine Gewindehülse 62 eingeschraubten Lagersicherungsschraube 58 festgelegt ist. An dem der Lageraufnahme 48 gegenüberliegenden Ende weist die Stützeinheit 73 einen Kopplungskörper 15 auf. Dieser ist über eine Befestigungsschraube 56, die in eine in die Tragstange 14 eingesetzte Gewindehülse 62 eingeschraubt ist, befestigt. Axial zu dem Kopplungskörper 15 beabstandet ist ein Grundring 72 angeordnet. Der Grundring 72 ist dabei über Distanzstäbe 71 von einer an der Tragstange 14 angeordneten Tragscheibe 74 beabstandet, wobei die Distanzstäbe 71 mit der Tragscheibe 74 über Befestigungsschrauben 49 und mit dem Grundring 74 über Befestigungsschrauben 97 verbunden sind. Über den Kopplungskörper 15 sowie den Grundring 72 besteht die Möglichkeit, die Hebevorrichtung 1 an einer in Kraftfahrzeugwerkstätten üblicherweise vorhandenen Hebevorrichtung anzuordnen.

Zur Einstellung einer Neigung der Lastaufnahmeeinheit 2 über die Radialgelenk-Lagereinheit 34 weist die Stützeinheit 73 zwei um 90° versetzt zueinander angeordnete Neigungsversteller 7 auf. Die Neigungsversteller 7 sind einenends gelenkig an mit der Oberschale 36 über Befestigungsschrauben 13b verbundene Halter 12 befestigt. Ein Bolzen 50 erstreckt sich hierzu durch eine Lagerbuchse 51 einer Bolzenaufnahme 11 des Neigungsverstellers 7. Der Neigungsversteller 7 ist an dem Halter 12 über an dem Bolzen 50 angreifende Sicherungsringe 54 in seiner Position gesichert. In analoger Weise sind die Neigungsversteller 7 an den an dem Grundring 72 angeordneten Haltern 8 befestigt. Die Halter 8 sind an dem Grundring 72 mittels Befestigungsschrauben 13a festgelegt.

Mit ihren den Bolzenaufnahmen 11 gegenüberliegenden Enden sind die Gewindestangen 10 in ein Innengewinde 52 eines Handgriffs 9 eingeschraubt. Eine Verdrehung des Handgriffs 9 bewirkt somit eine Längenveränderung des Neigungsverstellers 7 und hierdurch ein Verkippen der Lastaufnahmeeinheit 2 gegenüber einer sich durch die Längsachse der Tragstange 14 erstreckenden Längsachse. Über die beiden um 90° versetzt zueinander um die Tragstange 14 angeordneten Neigungsversteller 7 lässt sich somit eine durch die Tragarme 3 der Lastaufnahmeeinheit 2 aufgespannte Ebene in eine beliebige Richtung gegenüber der Längsachse der Tragstange 14 neigen.

**Bezugszeichenliste**

| | | | |
|---|---|---|---|
| 1 | Hebevorrichtung | 30 | Lagerring |
| 2 | Lastaufnahmeeinheit | 31 | Zwischenring |
| 3 | Tragarm | 32 | Gehäusedeckel |
| 4 | Hülse | 33 | Gehäusegrundkörper |
| 5 | Aufnahmeöffnung | 34 | Radialgelenk-Lagereinheit |
| 6 | Nut | 35 | Unterschale |
| 7 | Neigungsversteller | 36 | Anschlusskörper, Oberschale |
| 8 | Halter | 38 | Winkelskala |
| 9 | Handgriff | 39 | Führungsbolzen |
| 10 | Gewindestange | 40 | Blockiereinheit |
| 11 | Bolzenaufnahme | 41 | Führungsabschnitt |
| 12 | Halter | 42 | Befestigungsschraube |
| 13a, 13b | Befestigungsschraube | 43 | Bremsklotz |
| 14 | Tragstange | 44 | Befestigungsschraube |
| 15 | Kopplungskörper | 45 | Indikator |
| 16 | Zeigerelement/Öffnung | 47 | Längenskala |
| 17 | Spannelement | 48 | Lageraufnahme |
| 18 | Spannhebel | 49 | Befestigungsschrauben |
| 19 | Arretierungsbügel | 50 | Bolzen |
| 20 | Bremskörper | 51 | Lagerbuchse |
| 21 | Rolle | 52 | Innengewinde |
| 22 | Lagerkappe | 53 | Schubstange |
| 23 | Lagerkörper | 54 | Sicherungsring |
| 24 | Halteschale | 55 | Nutenstein |
| 25 | Befestigungsschraube | 56 | Befestigungsschraube |
| 26 | Zeigerelement | 57 | Zylinderstift |
| 27 | Gewindeabschnitt | 58 | Lagersicherungsschraube |
| 28 | Rastabschnitt | 59 | Radial-Gelenklager |
| 29 | Nut | 60 | Befestigungsschrauben |
| 61 | Schraubverschluss | 82 | Taster |
| 62 | Gewindehülse | 83 | Spannstift |
| 63 | Scheibe | 84 | Gewindestift |
| 64 | Druckfeder | 85 | Grundkörper |
| 65 | Zentralstab | 86 | Passfeder |
| 66 | Zylinderstift | 87 | Spannhebel |
| 67 | Verschlusskörper | 88 | Öffnung |
| 68 | Sicherungsring | 89 | Öffnung |
| 69 | Kappe | 90 | Öffnung |
| 70 | Haltestange | 91 | Langloch |
| 71 | Distanzstäbe | 92 | Steg |
| 72 | Grundring | 93 | Nut |
| 73 | Stützeinheit | 94 | Durchgang |
| 74 | Tragscheibe | 95 | Bohrung |
| 75 | Sicherungsbolzen | 96 | Kopplungseinheit |
| 76 | Öffnung | 97 | Befestigungsschrauben |
| 77 | Öffnung | 98 | Rasteinheit |
| 78 | Zylinderstift | 99 | Bolzen |
| 79 | Schrauben | 100 | Zylinderstift |
| 80 | Rolle | | |
| 81 | Hebel | | |

## Patentansprüche

1. Hebevorrichtung für eine Kraftfahrzeugbaugruppe, mit
- einer Lastaufnahmeeinheit (2) mit mindestens einem um eine Längsachse der Lastaufnahmeeinheit (2) schwenkbaren Tragarm (3) sowie
- einer an dem Tragarm (3) angeordneten Kopplungseinheit (96) zur lösbaren Verbindung des Tragarms (3) mit der Kraftfahrzeugbaugruppe, wobei die Kopplungseinheit (96) längsverschieblich an dem Tragarm (3) gelagert ist und die Lastaufnahmeeinheit (2) zur Verbindung mit einer Kraneinheit ausgebildet ist,
**wobei**
die Lastaufnahmeeinheit (2) lösbar mit einem Anschlusskörper (36) einer Stützeinheit (73) verbunden ist, wobei der Anschlusskörper (36) neigbar an der Stützeinheit (73) angeordnet ist
**dadurch gekennzeichnet, dass**
an dem Tragarm (3) eine Blockiereinheit (40) angeordnet ist, die zwischen einer den Tragarm (3) zur Verschwenkung freigebenden Freigabestellung und einer den Tragarm (3) an der Lastaufnahmeeinheit (2) festlegenden Arretierungsstellung verstellbar ist und die Blockiereinheit (40) einen Bremskörper (20) aufweist, der mittels eines Betätigungselements in Richtung auf einen Gehäusegrundkörper (33) der Lastaufnahmeeinheit (2) verstellbar ist, wobei der Bremskörper (20) in der Arretierungsstellung den Tragarm (3) kraftschlüssig an dem Gehäusegrundkörper (33) arretiert.

2. Hebevorrichtung nach Anspruch 1, **dadurch gekennzeichnet, dass** das Betätigungselement durch einen Spannhebel (87) gebildet wird.

3. Hebevorrichtung nach Anspruch 1 oder 2, **dadurch gekennzeichnet, dass** der Anschlusskörper (36) mittels einer Radialgelenklagereinheit (34) an der Stützeinheit (73) angeordnet ist.

4. Hebevorrichtung nach nach einem oder mehreren der vorhergehenden Ansprüche, **dadurch gekennzeichnet, dass** mindestends einlängeneinstellbarer Neigungsversteller (7) einenends mit dem Anschlusskörper (36) und anderenends mit einem Grundring (72) der Stützeinheit (73) verbunden sind.

5. Hebevorrichtung nach einem oder mehreren der vorhergehenden Ansprüche, **dadurch gekennzeichnet, dass** der Grundring (72) zur koaxialen und/oder ein Kopplungskörper (15) der Stützeinheit (73) zur axialen Verbindung mit einem Anschlussabschnitt einer Hubeinheit ausgebildet sind.

6. Hebevorrichtung nach Anspruch 5, **dadurch gekennzeichnet, dass** die Blockiereinheit (40) eine zwischen einer Freigabeposition und einer Rastposition verstellbare Rasteinheit (98) aufweist, die das Betätigungselement (87) in der Arretierungsstellung an einem Grundkörper (85) der Blockiereinheit (40) lösbar verrastet.

7. Hebevorrichtung nach Anspruch 6, **dadurch gekennzeichnet, dass** die Rasteinheit (98) der Blockiereinheit (40) in Richtung auf die Rastposition vorgespannt ist.

8. Hebevorrichtung nach einem oder mehreren der Ansprüchen 6 bis 7, **dadurch gekennzeichnet, dass** der Spannhebel (87) der Blockiereinheit (40) schwenkbar an dem Grundkörper (85) angeordnet ist und mit einer Außenkontur an einer linearverschieblich an dem Grundkörper (85) angeordneten, mit dem Bremskörper (20) verbundenen Schubstange (53) in Eingriff befindlich ist.

9. Hebevorrichtung nach einem oder mehreren der Ansprüche 6 bis 8, **dadurch gekennzeichnet, dass** die Rasteinheit (98) der Blockiereinheit (40) mittels eines sich parallel zu dem Spannhebel (87) in der Arretierungsstellung erstreckenden Bedienhebels (81) aus der Rastposition in die Freigabeposition verstellbar ist.

## Claims

1. Lifting device for a motor vehicle sub-assembly with
- a load-bearing unit (2) with at least one support arm (3) pivotable about a longitudinal axis of the load-bearing unit (2) as well as
- a coupling unit (96) arranged on the support arm (3) for the releasable connection of the support arm (3) with the motor vehicle sub-assembly, wherein the coupling unit (96) is mounted in a longitudinally displaceable manner on the support arm (3) and the load-bearing unit (2) is designed for connection with a crane unit,
**wherein**
the load-bearing unit (2) is connected releasably with a connection body (36) of a support unit (73), wherein the connection body (36) is arranged in a tiltable manner on the support unit (73),
**characterized in that**
a blocking unit (40) is arranged on the support arm (3), which is adjustable between a release position releasing the support arm (3) for pivoting and a locking position fixing the support arm (3) on the load-bearing unit (2) and the blocking unit (40) has a brake body (20), which is adjustable in the direction towards a housing main body (33) of the load-bearing unit (2) by means of an actuating element, wherein the brake body (20) in the locking position locks the support arm (3) in a frictional manner on the housing main body (33).

2. The lifting device according to claim 1, **characterized in that** the actuating element is formed by a tension lever (87).

3. The lifting device according to claim 1 or 2, **characterized in that** the connection body (36) is arranged on the support unit (73) by means of a radial joint bearing unit (34).

4. The lifting device according to one or more of the preceding claims, **characterized in that** at least one length-adjustable tilt adjuster (7) is connected on one end with the connection body (36) and on the other end with a bottom ring (72) of the support unit (73).

5. The lifting device according to one or more of the preceding claims, **characterized in that** the bottom ring (72) is designed for coaxial connection and/or a coupling body (15) of the support unit (73) is designed for axial connection with a connection section of a lifting unit.

6. The lifting device according to claim 5, **characterized in that** the blocking unit (40) has a locking unit (98) adjustable between a release position and a locking position, which releasably locks the actuating element (87) in the locking position on a main body (85) of the blocking unit (40).

7. The lifting device according to claim 6, **characterized in that** the locking unit (98) of the blocking unit (40) is preloaded in the direction towards the locking position.

8. The lifting device according to one or more of the claims 6 to 7, **characterized in that** the tension lever (87) of the blocking unit (40) is arranged in a pivotable manner on the main body (85) and is engaged with an outer contour on a push rod (53) that is arranged in a linearly displaceable manner on the main body (85) and that is connected with the brake body (20).

9. The lifting device according to one or more of the claims 6 to 8, **characterized in that** the locking unit (98) of the blocking unit (40) is adjustable out of the locking position into the release position by means of a control lever (81) extending parallel to the tension lever (87) in the locking position.

## Revendications

1. Dispositif de levage pour un module de véhicule automobile, comprenant
- une unité de réception de charge (2) comprenant au moins un bras de support (3) apte à pivoter autour d'un axe longitudinal de l'unité de réception de charge (2), et
- une unité d'accouplement (96) disposée sur le bras de support (3) pour relier de façon détachable le bras de support (3) au module de véhicule automobile, l'unité d'accouplement (96) étant montée sur le bras de support (3) de manière à pouvoir coulisser longitudinalement, et l'unité de réception de charge (2) étant conçue pour être reliée à une unité de grue,
dans lequel
- l'unité de réception de charge (2) est reliée de façon détachable à un corps de raccordement (36) d'une unité d'appui (73), le corps de raccordement (36) étant disposé de façon inclinable sur l'unité d'appui (73),
**caractérisé en ce que**
- une unité de blocage (40) est disposée sur le bras de support (3), laquelle peut être déplacée entre une position de libération permettant de libérer le bras de support (3) pour le pivotement et une position d'arrêt fixant le bras de support (3) sur l'unité de réception de charge (2), et l'unité de blocage (40) présente un corps de freinage (20) apte à être déplacé vers un corps de base de boîtier (33) de l'unité de réception de charge (2) à l'aide d'un élément d'actionnement, le corps de freinage (20) arrêtant le bras de support (3) par adhérence sur le corps de base de boîtier (33) dans la position d'arrêt.

2. Dispositif de levage selon la revendication 1, **caractérisé en ce que** l'élément d'actionnement est formé par un levier de serrage (87).

3. Dispositif de levage selon la revendication 1 ou 2, **caractérisé en ce que** le corps de raccordement (36) est disposé sur l'unité d'appui (73) à l'aide d'une unité de palier à articulation radiale (34).

4. Dispositif de levage selon l'une ou plusieurs des revendications précédentes, **caractérisé en ce qu'**au moins un dispositif de réglage de l'inclinaison (7) réglable en longueur est relié à une extrémité au corps de raccordement (36) et à l'autre extrémité à un anneau de base (72) de l'unité d'appui (73).

5. Dispositif de levage selon l'une ou plusieurs des revendications précédentes, **caractérisé en ce que** l'anneau de base (72) est conçu pour une liaison coaxiale avec une section de raccordement d'une unité de levage et/ou un corps d'accouplement (15) de l'unité d'appui (73) est conçu pour la liaison axiale avec celle-ci.

6. Dispositif de levage selon la revendication 5, **caractérisé en ce que** l'unité de blocage (40) présente une unité d'encliquetage (98) déplaçable entre une position de libération et une position d'encliquetage, laquelle encliquète l'élément d'actionnement (87) dans la position d'arrêt de façon détachable sur un corps de base (85) de l'unité de blocage (40).

7. Dispositif de levage selon la revendication 6, **caractérisé en ce que** l'unité d'encliquetage (98) de l'unité de blocage (40) est précontrainte dans la direction vers la position d'encliquetage.

8. Dispositif de levage selon l'une ou plusieurs des revendications 6 à 7, **caractérisé en ce que** le levier de serrage (87) de l'unité de blocage (40) est disposé de façon pivotante sur le corps de base (85) et présente un contour extérieur venant en prise avec une tige de poussée (53) reliée au corps de freinage (20), disposée de façon linéairement déplaçable sur le corps de base (85).

9. Dispositif de levage selon l'une ou plusieurs des revendications 6 à 8, **caractérisé en ce que** l'unité d'encliquetage (98) de l'unité de blocage (40) peut être déplacée de la position d'encliquetage vers la position de libération à l'aide d'un levier de commande (81) s'étendant parallèlement au levier de serrage (87) dans la position d'arrêt.
